Europäisches Patentamt

European Patent Office

Office européen des brevets

(19)

(11) Veröffentlichungsnummer: **0 128 314**
**A2**

## (12) EUROPÄISCHE PATENTANMELDUNG

(21) Anmeldenummer: **84104780.6**

(22) Anmeldetag: **27.04.84**

(51) Int. Cl.³: **H 02 G 1/12**

(30) Priorität: **18.05.83 CH 2720/83**

(71) Anmelder: **KAVED AG, Bahnhofstrasse, CH-6048 Horw (CH)**

(43) Veröffentlichungstag der Anmeldung: **19.12.84**
**Patentblatt 84/51**

(72) Erfinder: **Randegger, Kaspar, Matthofstrasse 10, CH-6005 Luzern (CH)**

(84) Benannte Vertragsstaaten: **AT BE DE FR GB IT LU NL SE**

(74) Vertreter: **Meyer, Reinhard, Dipl.-Ing., c/o Dr. A. R. Egli & Co. Patentanwälte Horneggstrasse 4, CH-8008 Zürich (CH)**

(54) **Gerät zum thermischen Abisolieren eines elektrischen, isolierten Kabels.**

(57) Das auf einer Grundplatte (1) befestigte Abisoliergerät weist zwei Arme (6, 7) auf, von denen der eine Arm (6) ortsfest auf der Grundplatte (1) gelagert ist und der andere Arm (7) durch einen von einem Getriebemotor (17) angetriebenen Exzenterantrieb (12, 15) bewegt wird. An den freien Enden der Arme (6, 7) sind beheizte Messerteile (25) vorgesehen, zwischen die ein Kabelende gelegt wird und die die Isolation am Kabelende aufschmelzen, so daß sie entfernt werden kann. Das freigelegte Ende des Leiters kann anschließend mit einem Anschlußteil versehen werden, wie er für Verdrahtungen von Maschinen und Apparaten benötigt wird. Der beim Abisolieren anfallende Materialrest wird durch ein Auswurfgerät aus dem Bereich der Arme (6, 7) entfernt, das mit einem Auswerferarm (39) versehen ist, der einen verstellbaren Anschlag (40) zum Einstellen der Abisolierlänge trägt. Durch diese Anordnung kann eine problemlose und zuverlässige Abisolieroperation selbsttätig durchgeführt und gegenüber den bekannten Geräten beschleunigt werden.

Gerät zum thermischen Abisolieren eines
elektrischen, isolierten Kabels

———————————————

Die Erfindung betrifft ein Gerät zum thermischen Abisolieren eines elektrischen, isolierten Kabels, das zwei
zangenartig bewegbare Arme aufweist, die an ihren Enden
mit beheizten, der Form des Leiters im Kabel angepassten
profilierten Messerteilen zum örtlichen Aufschmelzen der
Isolation an dem Kabelende und zum Abziehen derselben von
dem Leiter versehen sind.

Das thermische Abisolieren elektrischer, isolierter Leiter
ist eine Teiloperation der Kabelkonfektionierung. Hierbei
wird unter Kabelkonfektionierung das Ausrüsten der Kabelenden mit Verbindungselementen, wie beispielsweise Kontaktstifte und -buchsen, Oesen o.dgl., verstanden. Die Kabelkonfektionierung stellt somit einen wesentlichen Teil der
bei Verdrahtungen von Maschinen und Apparaten auszuführenden
Arbeit dar.

Für das thermische Abisolieren von isolierten Leitern ist
es bekannt, das Abisolieren mittels Handzangen auszuführen,
die an den Zangenenden mit beheizten Messern ausgerüstet
sind, mit denen an den Kabelenden die Isolation auf eine
bestimmte Länge entfernt wird, damit die Ausrüstung des
Leiterendes vorgenommen werden kann. Der Nachteil solcher
Handgeräte besteht darin, dass für die Handhabung der Kabel

0128314

nur eine Hand zur Verfügung steht. Da zudem der entfernte
Teil der Isolation an den Zangenarmen hängen bleibt, muss
vor der nächsten Abisolieroperation dieser Isolierrest
entfernt werden, was einen zusätzlichen Arbeitsaufwand
bedeutet.

Hier setzt die Erfindung ein, der die Aufgabe zugrundeliegt, ein Gerät der eingangs beschriebenen Art so auszugestalten, dass es unter Vermeidung der Nachteile der
bekannten Geräte eine Vereinfachung der Handhabung von
isolierten Leitern bei der Abisolieroperation ermöglicht.

Diese Aufgabe wird gemäss der Erfindung dadurch gelöst,
dass der eine Arm ortsfest auf einer Grundplatte und der
andere Arm mit einer Schwenkachse in einem auf der Grundplatte abgestützten Lagersupport schwenkbar gelagert ist,
wobei der andere Arm eine über die Schwenkachse sich
erstreckende Armverlängerung aufweist und an dieser Verlängerung einen Teil eines motorisch angetriebenen Getriebes
zum Heben und Senken des anderen Arms und damit zum Oeffnen
und Schliessen der Messerteile bildet.

Dadurch wird erreicht, dass beide Hände für die Handhabung
der Kabel frei sind.

Weiter wird ermöglicht, dass die Abisolierlänge vorgewählt
und der abisolierte Materialrest selbsttätig entfernt wird.
Hierzu dient erfindungsgemäss ein Apparat mit einem
erfindungsgemässen Gerät, bei dem dem Abisoliergerät ein
Auswurfgerät zum Auswerfen des vom Leiter abisolierten
Materialrestes zugeordnet ist, das nach jeder Abisolieroperation den bei den Messerteilen anfallenden Materialrest entfernt.

0128314

Die Erfindung ist in der Zeichnung in einem Ausführungsbeispiel dargestellt und nachfolgend beschrieben. Es
zeigen:

Fig. 1  eine Draufsicht eines Apparates zum thermischen
        Abisolieren mit einem Abisoliergerät und einem
        Auswurfgerät, wobei eine den Apparat bedeckende
        Haube entfernt ist,

Fig. 2  eine Seitenansicht des Apparates nach Fig. 1,

Fig. 3  eine Stirnansicht des Abisoliergerätes aus
        Richtung III bei geschlossenen und

Fig. 4  bei geöffneten Abisoliermessern und

Fig. 5  eine Anzahl mit a), b) und c) bezeichneter
        Abisoliermesser.

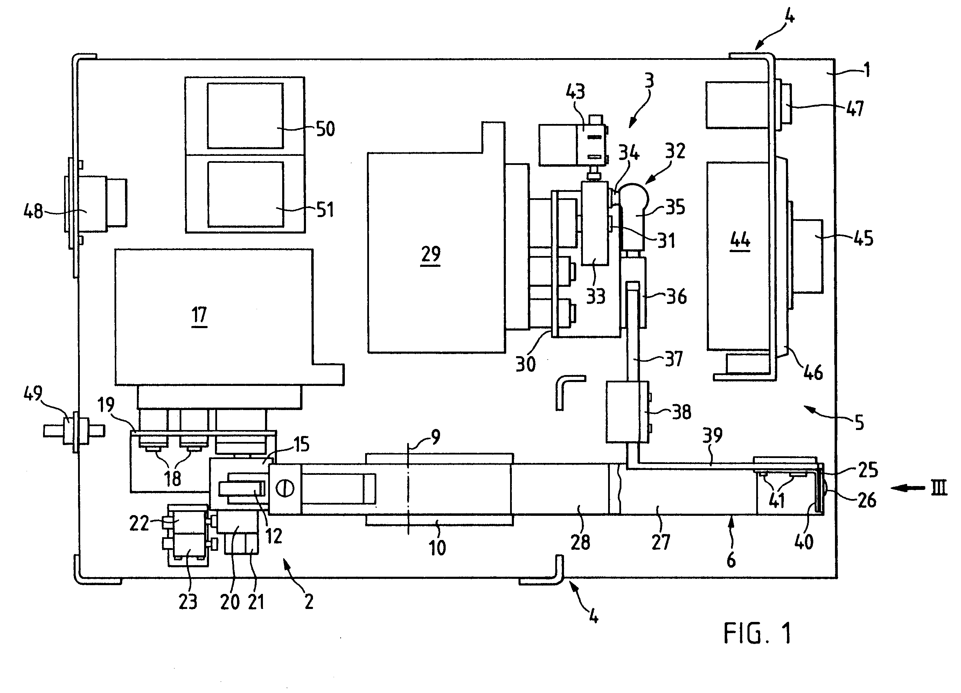

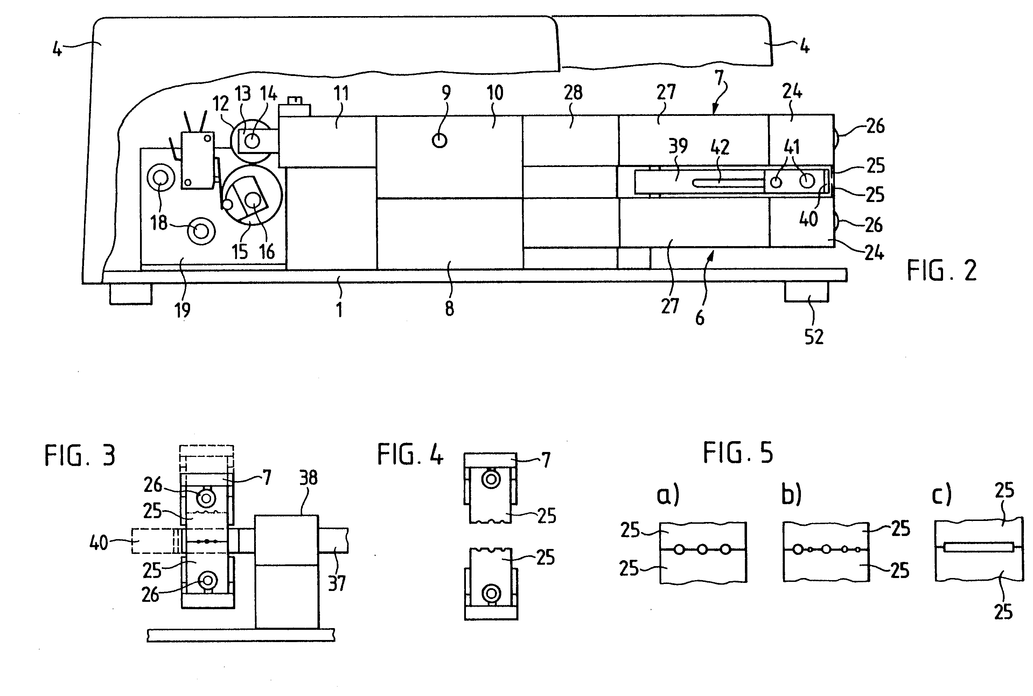

Der Abisolierapparat nach Fig. 1 weist eine Grundplatte 1
auf, auf der die einzelnen Geräte-und Apparatekomponenten
montiert sind. Der Apparat weist ein Abisoliergerät 2 und
ein Auswurfgerät 3 auf. Eine Haube 4 deckt die beiden
Geräte 2, 3 ab, siehe Fig. 2. Aus Fig. 1 ist erkennbar,
dass die Haube 4 eine Einbuchtung 5 aufweist, so dass noch
näher zu beschreibende Teile der beiden Geräte 2, 3 nicht
abgedeckt sind, was aus Gründen der Funktion des Apparates
erforderlich ist.

Das Abisoliergerät 2 weist zwei zangenartig ausgebildete
Arme 6, 7 auf, von denen der untere Arm 6 ortsfest auf
einem auf der Grundplatte 1 befestigten Lagerblock 8 abgestützt ist. Der obere Arm 7 ist mittels einer Achse 9 in einem Support 10 schwenkbar gelagert und weist eine sich nach hinten erstreckende Armverlängerung 11 auf. An der Armverlängerung 11 ist eine Rolle 12 mittels Stegen 13 und einer Achse 14 drehbar gelagert. Die Rolle 12 bildet einen Teil eines Exzenterantriebes für den schwenkbaren oberen Arm 7, dessen Exzenterrolle 15 auf einer motorisch angetriebenen Achse 16 befestigt ist. Den Antrieb der Achse 16 bildet ein elektrischer Getriebemotor 17 mit einem Getriebe grosser Untersetzung. Der Getriebemotor 17 ist mit zwei Befestigungsschrauben an einem Befestigungssteg 19 befestigt, der auf der Grundplatte 1 abgestützt ist. Neben dem Exzenter 15 sind auf der Achse 16 Steuernocken 20, 21 befestigt, mit denen Kontakte 22, 23 geschaltet werden.

Die Arme 6, 7 weisen an ihrem freien Ende je einen Messerblock 24 auf, in denen je ein Messerteil 25 mittels einer Schraube 26 befestigt ist. In dem Messerblock 24 sind ein Heizelement und ein Temperaturfühler eingebaut. Die vom Heizelement erzeugte Wärme dient der Aufheizung der Messerteile 25.

Der Messerblock 24 ist in ein Halterohr 27 eingesetzt, das seinerseits auf einem Haltearm aufgesteckt ist. Der Haltearm 28 ist aus einem wärmedämmenden Material gefertigt, um den Wärmefluss von dem Messerblock 24 in den hinteren Teil der Arme 6, 7 und in die Lagerungen gering zu halten.

Das Auswurfgerät 3 weist ebenfalls einen elektrischen Getriebemotor 29 auf, der in gleicher Weise wie der Getriebemotor 17 an einem Steg 30 befestigt ist. Der Getriebemotor 29 treibt eine Antriebsachse 31 an, auf der ein Kurbeltrieb 32 angeordnet ist. Die Kurbel dieses Kurbeltriebes ist eine auf der Antriebsachse 31 aufgesetzte Scheibe 33, an der ein Kurbelzapfen 34 befestigt ist. Auf dem Kurbelzapfen 34 ist eine Pleuelstange 35 gelagert, auf der längenverstellbar
eine Gabel 36 befestigt ist, an der mit einer Achse
(nicht dargestellt) eine Schubstange 37 angekuppelt ist.
Die Schubstange 37 ist in einem auf der Grundplatte 1
abgestützten Lagerkörper 38 verschiebbar geführt.

An dem freien Ende der Schubstange 37 schliesst ein
Auswerferarm 39 an, der auf einer Höhe zwischen den beiden
Armen 6, 7 liegt und in der Ruhelage knapp zwischen die
beiden Arme 6, 7 ragt. Auf dem Auswerferarm 39 ist ein
Winkel 40 mittels Schrauben 41 befestigt, dessen Lage
innerhalb eines Schlitzes 42 im Auswerferarm 39 einstellbar ist.
Der eine Schenkel dieses Winkels bildet einen Anschlag 40, der die
Abisolierlänge, d.h. den Abstand zwischen dem Anschlag 40
und den Messerteilen 25, definiert.

Wird der Getriebemotor 29 in Bewegung gesetzt, überträgt
der Kurbeltrieb 32 eine Bewegung auf die Schubstange 37,
wobei der Auswerferarm 39 eine Hubbewegung von angenähert
der Breite der Arme 6, 7 ausführt. Hierbei wird ein
zwischen den Armen 6, 7 verbliebener Rest an Isoliermaterial ausgeworfen. Ein der Scheibe 33 zugeordneter
Schalter 43 bewirkt das Anhalten des Getriebemotors 29.

Auf der Grundplatte 1 ist weiter ein Temperaturregler 44
befestigt, mit dessen Verstellknopf 45 die in den beiden
Messerblöcken 24 einzuhaltende Temperatur eingestellt
werden kann. Auf einer auf der Vorderseite des Temperaturreglers 44 angeordneten Temperaturskala 46 kann die jeweils
eingestellte Temperatur festgestellt werden. Neben dem
Temperaturregler 44 ist ein Schalter 47 angeordnet, mit
dem der Apparat eingeschaltet wird. Mit einer Steckdose 48 kann der Apparat an das Netz angeschlossen werden. Mit einem weiteren Anschluss 49 wird ein Fuss-Schalter (nicht dargestellt) angeschlossen, mit dem eine Abisolieroperation ausgelöst werden kann.

Zum Ausführen einer Abisolieroperation wird am Temperaturregler die der Isolation entsprechende Temperatur und mit dem Anschlagwinkel 40 die Abisolierlänge eingestellt. In der Ruhelage ist der obere Arm 7 in der Oeffnungslage, so dass das Kabelende bis zum Anschlag 40 zwischen die Messerteile 25 eingeschoben werden kann. Beim Drücken des Fusspedals dreht sich der Exzenter 15 um $180^\circ$, wodurch der Arm 7 gegen den Arm 6 bewegt wird und die Messerteile 25 sich aufeinanderlegen. Nachdem der zu entfernende Isolationsrest von der Kabelisolation getrennt ist, kann das Kabel weggezogen werden. Nun wird das Fusspedal losgelassen, was ein nochmaliges Drehen des Exzenters 15 um $180^\circ$ in seine Ausgangsstellung zur Folge hat. Gleichzeitig wird die Schubstange 37 durch den Kurbeltrieb 32 betätigt, wodurch der zwischen den Armen 6, 7 verbleibende Isolationsrest ausgeworfen wird, siehe in Fig. 3 die gestrichelt angedeutete Auswurfstellung und die ebenfalls gestrichelt angedeutete Ruhelage des oberen Arms 7.

In Fig. 4 ist die Oeffnungslage der Messerteile 25 dargestellt. Aus Fig. 5 ist ersichtlich, dass beliebige Formen von Leitern abisoliert werden können. Fig. 5 a) und b) zeigen Messerteile 25 mit einzelnen Drähten, während in Fig. 5 c) Messerteile 25 für beispielsweise ein Flachkabel dargestellt sind. Viele andere Formen von Kabeln können problemlos abisoliert werden. Die Messerteile 25 werden nicht scharf, sondern flach ausgebildet und trennen den abzuisolierenden Isolationsrest durch Wärme von der übrigen Isolation. Das Leitermaterial soll hierbei nicht beschädigt werden. Der beschriebene Apparat zum Abisolieren von isolierten Leitern bietet ein Optimum an Unterstützung zur raschen Abisolierung. Die Abisolier- und die Auswurfoperation kann mit kleinstem Zeitaufwand mit den Schaltern 22, 23, 43 gesteuert werden, durch die über Relais 50, 51 die Getriebemotoren 17, 29 ein- und ausgeschaltet werden.

Der Apparat kann mit seiner Grundplatte 1, an der Gummifüsse 51 angebracht sein können, als Tischmodell verwendet werden, wobei die Betätigung durch das Fusspedal erfolgt. Durch die Haube 4 sind alle Geräte abgedeckt, so dass nur diejenigen Teile frei sind, die unmittelbar für die Abisolieroperation benötigt werden. Die Einbuchtung 5 lässt somit nur einen Teil der Arme 6, 7 und den Auswerferarm 39 frei. Es könnte allerdings auch ein Apparat verwendet werden, der nur das Gerät zum thermischen Abisolieren aufweist. In diesem Fall wird zwar ebenfalls das Abisolieren von elektrischen Kabeln vereinfacht und erleichtert, jedoch müsste wegen des Fehlens des Auswurfgerätes 3 das vom Leiter entfernte Isolationsmaterial manuell aus dem Bereich der Messerteile 25 entfernt werden.

## Patentansprüche

1. Gerät (2) zum thermischen Abisolieren eines elektrischen,
   isolierten Kabels, das zwei zangenartig bewegbare Arme
   (6, 7) aufweist, die an ihren Enden mit beheizten, der
   Form des Leiters im Kabel angepassten profilierten
   Messerteilen (25) zum örtlichen Aufschmelzen der Isolation an dem Kabelende und zum Abziehen derselben von
   dem Leiter versehen sind, dadurch gekennzeichnet, dass
   der eine Arm (6) ortsfest auf einer Grundplatte (1) und
   der andere Arm (7) mit einer Schwenkachse (9) in einem
   auf der Grundplatte (1) abgestützten Lagersupport (10)
   schwenkbar gelagert ist, wobei der andere Arm (7) eine
   über die Schwenkachse (9) sich erstreckende Armverlängerung (11) aufweist und an dieser Verlängerung (11)
   einen Teil eines motorisch angetriebenen Getriebes (12,
   15) zum Heben und Senken des anderen Arms (7) und damit
   zum Oeffnen und Schliessen der Messerteile (25) bildet.

2. Gerät nach Anspruch 1, dadurch gekennzeichnet, dass
   die Arme (6, 7) sich aus einem, den Messerteil (25) und
   ein Heizelement aufnehmenden Messerblock (24) und aus
   einem daran anschliessenden Halterohr (27) zusammensetzen, welch letzteres in einem Haltearm (28) aus
   einem vorzugsweise wärmedämmenden Material gelagert ist.

3. Gerät nach Anspruch 1, dadurch gekennzeichnet, dass
   das Hubgetriebe (12, 15), z.B. ein Exzentertrieb, von
   einem Getriebemotor (17) angetrieben ist, dessen Bewegungsablauf durch Kontakte (22, 23), z.B. Endschalter,
   gesteuert ist.

4. Apparat zum selbsttätigen thermischen Abisolieren eines
   elektrischen Leiters mit einem Abisoliergerät nach Anspruch 1, dadurch gekennzeichnet, dass dem Abisoliergerät (2) ein Auswurfgerät (3) zum Auswerfen des vom
Leiter abisolierten Materialrestes zugeordnet ist, das
nach jeder Abisolieroperation den bei den Messerteilen
(25) anfallenden Materialrest entfernt.

5. Apparat nach Anspruch 4, dadurch gekennzeichnet, dass
das Auswurfgerät (3) einen von einem Hubgetriebe (32)
motorisch angetriebenen, zwischen die Arme (6, 7) des
Abisoliergerätes (2) bewegbaren Auswerferarm (39) aufweist.

6. Apparat nach Anspruch 5, dadurch gekennzeichnet, dass
der Auswerferarm (39) einen zwischen die Arme (6, 7)
reichenden, verstellbaren Anschlag (40) zur Einstellung
der Abisolierlänge aufweist.

7. Apparat nach Anspruch 5, dadurch gekennzeichnet, dass
das Hubgetriebe (32) für die Bewegung des Auswerferarmes (39), z.B. ein Kurbeltrieb (33, 34), von einem
Getriebemotor (29) angetrieben ist, dessen Bewegungsablauf durch einen Kontakt, z.B. einen Endschalter (43),
gesteuert und mit dem Bewegungsablauf des Abisoliergerätes (2) koordiniert ist.

8. Apparat nach Anspruch 4, dadurch gekennzeichnet, dass
das im Messerblock (24) angeordnete Heizelement durch
einen einstellbaren Temperaturregler (44) auf konstante
Temperatur geregelt ist.

9. Apparat nach Anspruch 4, dadurch gekennzeichnet, dass
eine Haube (4) auf der Grundplatte (1) befestigt ist,
die das Abisoliergerät (2) und das Auswurfgerät (3) ab-

0128314

deckt, ausgenommen die Arme (6, 7) und den Auswerferarm (39) sowie die Heiztemperatureinstellung und
-ablesung (45, 46).

0128314

FIG. 1

FIG. 2

FIG. 3

FIG. 4

FIG. 5